# EUROPEAN PATENT APPLICATION

(11) **EP 1 376 274 A1**
(43) Date of publication of application: **02.01.2004**
(21) Application number: 02254242.7
(22) Date of filing: 18.06.2002
(51) Int. Cl.: G04G 1/00

(54) **Intermediate support structure and electronic timepiece having the same**

(71) Applicant: Seiko Instruments Inc., Chiba-shi, Chiba (JP)
(72) Inventor: Nakajima, Kenichi, c/o Seiko Instruments Inc., Chiba-shi, Chiba (JP); Endo, Morinobu, Suzaka-shi, Nagano (JP)
(74) Representative: Sturt, Clifford Mark

(57) **Abstract**

To provide an intermediate support structure (10) having both functions of a supporting function and a grounding function by a minimum size and an electronic timepiece using the same. An intermediate support structure of an electronic timepiece is constituted such that a base material is constituted by a resin and is elastically deformable, a conductive portion produced by dispersing a conductive carbon nanotube in the resin base material is included and the conductive portion is brought into contact with corresponding conductive parts (40,50) at surface exposed contact portions to provide a conductive path between the two conductive parts (40,50).

## Description

The present invention relates to a novel intermediate support structure, more in detail, to a novel intermediate support structure capable of serving to support and ground a part.

Here, an intermediate support structure typically indicates a constitution interposed between a substantially rigid frame member and a substantially rigid article to be supported for fixing or holding the article to be supported to or by a frame member.

With respect to a watch, a gear portion at an inner end of a wiring stem is engaged with a train wheel of a movement and by turning a winding crown at a projected end of the winding stem, displayed time and a hand position is corrected or a date is adjusted by way of the train wheel, a pinion portion or the like of the movement. Further, a current watch is of a mode of a so-to-speak quartz type electronic timepiece and the movement is assembled with an integrated circuit (IC) or a circuit block for controlling to drive or operate a crystal oscillator, a motor or the like.

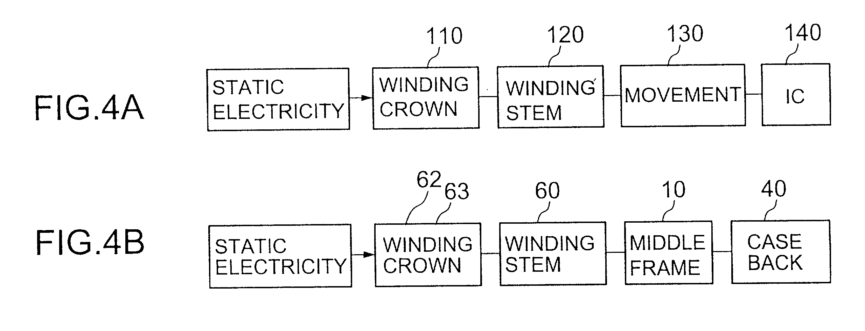

However, there is a case in which the above-described mechanical connection or contact relationship brings about an unexpected drawback electrostatically. That is, when a user of the watch or the like touches the winding crown of the watch by the electrostatically charged body in order to correct displayed time or date, there is a case in which as shown by Fig. 4A, static electricity is conducted from the body of the user to a part made of a metal of a winding crown 110 by passing through the finger, further to a metal portion of a movement 130 including a train wheel in mesh with a gear portion at a front end of a winding stem 120 by way of the winding stem 120 made of a metal attached with the winding crown 110 and finally reaches IC 140 or the like of the movement 130 to thereby cause leakage of static electricity. At this occasion, when an amount of electricity of flowing static electricity is large or potential or voltage of the body is high, there is a concern that excessively large current flows at IC 140 or the like or excessively large voltage is applied to IC 140 or the like to thereby destruct or erroneously operate IC 140 or the like. Further, there is also a concern that even when there is not a direct conductor path reaching IC 140 or the like, by discharge under high voltage, IC 140 or the like is destructed or erroneously operated.

There is also known an electronic timepiece in which in order to avoid such an adverse influence of static electricity, a metal plate is provided at a back face of the movement 130 supported by a middle frame or the like and a leaf spring made of a metal is provided between the metal plate and a case back or a hole reaching a conductive portion at inside of the movement 130 is formed at the back face of the movement 130 and a helical spring made of a metal is provided between a conductor at a bottom of the hole and the case back made of a metal to thereby escape static electricity. However, according to a conventional electronic timepiece of this kind, it is difficult to avoid a size such as a thickness of the watch from enlarging or a shape of the movement 130 per se from being restricted in order to ensure a space for arranging a spring or the like.

The invention has been carried out in view of the above-described various points, and it is an object thereof to provide a novel intermediate support structure having both functions of an intermediate supporting function and a grounding function by a minimum size.

It is another object of the invention to provide an electronic timepiece having such a novel intermediate support structure.

In order to achieve the above-described object, an intermediate support structure of the invention is an elastically deformable intermediate support structure, a base material of which comprises a resin and which includes a conductive portion produced by dispersing a conductive carbon nanotube in the resin base material and the conductive portion is constituted to be brought into contact with a corresponding conductive article at a surface exposed contact portion to provide a conductive path between two of the conductive articles.

According to the intermediate support structure of the invention, there is provided "the conductive portion constituted to be brought into contact with the corresponding conductive article at the surface exposed contact portion" and therefore, the conductive path is provided between (two of) the conductive articles by the conductive portion of the intermediate support structure. Further, according to the intermediate support structure of the invention, "the base material comprises a resin and is elastically deformable" and therefore, different from a case in which the intermediate support structure is substantially rigid (for example, a case in which the intermediate support structure comprises a metal material such as stainless steel), without interposing a spring or the like between the intermediate support structure for supporting an article to be supported and a substantially rigid frame member or the like, by pressing the intermediate support structure per se to the substantially rigid frame member, the article to be supported can be fixed to or held by the frame member and therefore, an occupying space can be minimized. Here, both of such a conducting function and an elastic intermediate supporting function are simultaneously satisfied by providing "the conductive portion produced by dispersing the conductive carbon nanotube in the resin base material" by the intermediate support structure.

"Elastic deformation" indicates either one or both of elastic deformation caused by a shape liable to undergo bending deformation such as a thin-walled annulus-like shape, a thin-walled ring-like shape, a shape of a thin-walled piece or the like, and softness of a material per se since the base material comprises a rein (a material per se is liable to be elastically deformed by compression or the like). Incidentally, when an article of the same shape as that of the intermediate support structure is assumedly formed by a metal material such as stainless steel, since the material is provided with high rigidity and devoid of softness of the material per se, in either of the respects, it is difficult to actually regard the material as "elastically deformable" and it is difficult to avoid use of a spring member or the like. As the resin, for example, polycarbonate resin is used. However, any other resin may be used so far as the resin is a material suitable for forming the elastically deformable intermediate support structure in the above-described meaning and is a material capable of uniformly and homogenously dispersing the carbon nanotube. When elastic deformation owing to softness of the material per se is utilized, the intermediate support structure typically includes a projected portion pressed to other article (typically, rigid frame member). At least a portion of the projected portion serves to be a surface exposed contact portion. In that case, the surface exposed contact portion achieves both functions of a supporting function and a grounding function.

In this case, a total of the intermediate support structure may comprise a conductive portion, or the intermediate support structure may be formed by including a nonconductive main body portion produced by dispersing a nonconductive carbon nanotube in the resin of the base material and integrally molding the nonconductive main body portion with the conductive portion. In this case, the intermediate support structure supports an object to be supported typically by a nonconductive portion (nonconductive main body portion) to minimize to effect an influence of static electricity on the article to the supported. In order to constitute the supporting, there may be provided contact engagement such that portions of surfaces of both members are brought into contact with each other, the both members may be engaged with or fitted to each other by providing shapes thereof complimentary to each other, or fixed to each other by a screw or a pin, or other mode of supporting may be constituted. However, the article to be supported may be supported by the conductive portion so far as there is provided a conductive path sufficient for leaking static electricity at a location remote from the article to be supported. Further, although in this case, typically, the nonconductive main body portion occupies a volume larger than that of the conductive portion, depending on cases, the conductive portion may be provided with a volume larger than that of the nonconductive main body portion.

According to other respect, in order to achieve the above-described object, the intermediate support structure of the invention is an intermediate support structure interposed between a substantially rigid article to be supported and a substantially rigid frame member attachedwith two of conductive articles for fixing the article to be supported to the frame member, including a nonconductive main body portion and at least one conductive portion integrally molded with the main body portion, the nonconductive main body portion includes a nonconductive carbon nanotube, the conductive portion includes a conductive carbon nanotube and there are provided contact portions exposed at two locations of a surface of the intermediate support structure to provide a conductive path between the two conductive articles and at least one of the nonconductive main body portion and the conductive portion is provided with a projected portion elastically pressed to the frame member.

In this case, according to the intermediate support structure of the invention, "the conductive portion is provided with the contact portions exposed at two locations of the surface of the intermediate support structure to provide the conductive path between the two conductive articles" and therefore, the two conductive articles are conducted by the conductive portion via the contact portions at the two locations. Therefore, even when one conductive article of the two conductive articles is directly effected with influence of static electricity as in, for example, a winding crown, by providing the two contact portions at the locations at positions at which an article for providing a place for escaping static electricity such as a conductive exterior part of a timepiece, constitutes other conductive article, static electricity unavoidably brought from a conductive part such as the winding crown, can be leaked such that adverse influence is not effected to an electronic part such as IC.

Further, "the substantially rigid frame member attached with two of the conductive articles" signifies to include a case in which both of the two conductive articles form a portion or a total of the substantially rigid frame member and a case in which one of the two conductive articles substantially forms a portion of the rigid frame member and other is attached to the rigid frame member movably or lightly (the above-described example of the winding crown) and a case in which both of the two conductive articles are movably or lightly attached to the rigid frame member. "substantially rigid" signifies to be difficult to deform in comparison with the shape of the intermediate support structure or the elasticity (easiness to elastically deform) of the material.

Further, according to the intermediate support structure of the invention, the conductive portion is integrally molded with the nonconductive main body portion of the intermediate support structure and therefore, different from a case in which a spring member made of a metal is additionally arranged, extra space is not needed. Therefore, not only a size of an apparatus integrated with the intermediate support structure can be minimized but also a degree of freedom of a shape of other part (for example, article to be supported) arranged adjacently to the intermediate support structure is enhanced.

Further, according to the intermediate support structure of the invention, the nonconductive main body portion includes the nonconductive carbon nanotube, the conductive portion includes the conductive carbon nanotube and therefore, the nonconductive main body portion and the conductive portion which are integrally molded, can be formed by materials which differ from each other only in respect of conductivities thereof and substantially similar to each other in other respect and therefore, the nonconductive main body portion and the conductive portion can integrally be molded solidly. Further, the nonconductive main body portion and the conductive portion can be reinforced respectively by the nonconductive and the conductive carbon nanotubes by including the carbon nanotubes and therefore, mechanical strength of a total thereof is also increased. Therefore, the nonconductive main body portion can adopt an arbitrary geometrical shape or a three-dimensional shape to be adopted by the intermediate support structure. As a result, "an engaging portion mechanically engaged with an article for supporting the article" of the nonconductive main body portion can be formed by a complicated shape as desired and therefore, it is easy to provide a supporting or engaging function particular to the nonconductive portion.

Further, according to the intermediate support structure of the invention, at least one of the nonconductive main body portion and the conductive portion, is provided with a projected portion elastically pressed to the frame member and therefore, the intermediate support structure can fixedly be held by the frame member by being interposed between the substantially rigid article to be supported and the substantially rigid frame member attached with the two conductive articles and elastically deforming the projected portion and therefore, the object to be supported can fixedly be held by the frame member via the intermediate support structure. In this case, when the material of the intermediate support structure is comparatively soft, the projected portion is typically constituted by an elastically compressible projected portion projected from the surface substantially orthogonally, meanwhile, when the material of the intermediate support structure is comparatively hard, the projected portion is typically constituted by a spring portion in a shape of a thin piece projected skewedly from the surface. However, if desired, other type may be permissible.

A number of the contact portions of the conductive portions may be two or three or more so far as the number is at least two. Further, the two contact portions may be constituted by a face actually the same as a face constituting the surface of the intermediate support structure or a face different therefrom.

Further, with regard to electric conductivity of the intermediate support structure, "nonconductivity" of the main body portion signifies "conductivity of the main body portion is low in comparison with the conductive portion to an identifiable degree". Therefore, although when the conductive portion is provided with metallic conductivity or conductive degree, the nonconductive main body portion is typically constituted by so-to-speak insulator having high electric insulating performance, depending on cases, the nonconductive main body portion may be semiconductive (typically, semiconductive conductive property and conductive degree in a temperature range of use). Further, when the nonconductive main body portion is constituted by a plurality of nonconductive areas separated from each other via the conductive portion, all of the nonconductive areas may be constructed by a substantially similar constitution, or one or a plurality of nonconductive areas may be constructed by constitutions different from each other. Meanwhile, when the conductive portion is provided with semiconductivity, the nonconductive main body portion is typically constituted by an insulator. Further, so far as the nonconductive main body portion and the conductive portion differ from each other to an identifiable degree with regard to the conductivity, depending on cases, both of the nonconductive main body portion and the conductive portion may be provided with conductivity normally referred to as metallic, or both may be provided with nonconductivity (insulating performance) normally referred to as electric insulating performance, or both may normally be provided with semiconductivity. Further, when the conductive portion is constituted by a plurality of conductive areas separated from each other via a nonconductive area constituting a portion of the nonconductive main body portion, all of the conductive areas may be constructed by a substantially similar constitution, or one or a plurality of conductive areas may be constructed by constitutions different from each other.

So far as the conductive portion is provided with the contact portions exposed at two locations of the surface of the nonconductive main body portion to provide the conductive path between two of the conductive articles, a portion thereof other than the exposed contact portions may be distributed in the nonconductive main body portion in any way. Further, the conductive article may be conductive at a total thereof or may be conductive at a portion of an area including the portion in contact with the contact portion. Further, the contact portion of the conductive portion may be disposed, for example, at an end portion of a slender conductive portion or may be disposed at a middle portion thereof, further, the conductive portion may constitute an endless loop.

A mode of exposing at the contact portion may be in the form of a layer along the surface of the intermediate support structure or a projected portion projected from the surface of the intermediate support structure. In the latter case, typically, a contact of the contact portion is formed at a front end of the projected portion of the conductive portion projected from the surface of the nonconductive main body portion. Further, depending on cases, the exposed contact portion may be constituted by a spring projected portion projected elastically deformably from the nonconductive main body portion and pressed to the conductive article.

In this case, the projected portion which has been constituted by a separate metal spring member conventionally, can be integrated to the nonconductive main body portion as a portion of the conductive portion and therefore, not only the composite electric part can be downsized as a whole but also in integrating the intermediate support structure, the intermediate support structure is dealt with extremely easily. Further, when the intermediate support structure is fabricated by the two colors or multicolors injection molding, carbon nanotubes forming slender projected portions can typically be aligned more or less along a direction of extending the projected portion and therefore, bending strength of the projected portion is also increased.

The number of the conductive portions may be one or one piece or one layer or may be plural (for example, one pair or two or three or more). In this case, the number of the conductive portions refers to the number of the conductive portions electrically insulated from each other. Therefore, one conductive portion may be provided with one or a plurality of branches or divided branches.

Meanwhile, the conductive portion may be embedded in the nonconductive main body portion, a portion thereof other than the terminal portion may be exposed partially to the surface of the non conductive main body portion, or the conductive portion may be exposed at the surface of the nonconductive main body portion in all of the areas, at an area thereof other than a vicinity of the contact portion electrically connected to the conductive article such that an occupied space of the intermediate support structure also in consideration of electric insulation from or capacity coupling to the article to be supported, can be minimized. In this case, the nonconductive main body portion may support the article to be supported by being engagedly brought into contact with the surface of the article to be supported, or support the article to be supported by being engaged with an engaged portion of the article to be supported by fitting or the like, or support the article to be supported by being fixed to the article to be supported by fastening or fixing means of screws or the like. Further, although the conductive portion is provided with substantially constant or similar cross-sectional shape and size regardless of a portion thereof in a longitudinal direction, the cross-sectional shape or the like may differ by a portion in an extending direction thereof.

Although most of the carbon nanotube included in the conductive portion is typically constituted by the conductive carbon nanotube, so far as the conductivity of the conductive portion is sufficiently higher than that of the nonconductive main body portion, a portion or a corresponding portion of the carbon nanotube included in the conductive portion may relatively be nonconductive. Although a rate of the corresponding portion is typically equal to or smaller than, for example, about 50%, depending on cases, the rate may exceed about 50%. Further, substantially all of the carbon nanotube included in the conductive portion may be constituted by the conductive carbon nanotube. Further, the conductive portion may simultaneously be blended or mixed with a constitution other than the carbon nanotube.

Similarly, most of the carbon nanotube included in the nonconductive main body portion is typically constituted by the nonconductive carbon nanotube, so far as the conductivity of the nonconductive main body portion is sufficiently lower than that of the conductive portion, a portion or a corresponding portion of the carbon nanotube included in the nonconductive main body portion may relatively be conductive. Although a rate of the corresponding portion is typically equal to or smaller than about 50%, depending on cases, the rate may exceed 50%. Further, substantially all of the carbon nanotube included in the nonconductive main body portion may be constituted by the nonconductive carbon nanotube. Further, the nonconductive main body portion may simultaneously be blended or mixed with a constitution other than the carbon nanotube.

When the nonconductive main body portion and the conductive portion of the intermediate support structure are constituted by dispersing the carbon nanotubes of the respective conductive properties in the same or the same kind of resin base material, the intermediate support structure is typically provided with a raised portion as the projected portion. In this case, since the rigidity of the resin base material is low (in comparison with the metal material such as stainless steel), by elastically deforming the raised portion including the resin base material and pressing the raised portion to the frame member, the intermediate support structure can fixedly be held by the frame member. In this case, typically, the contact portion constitutes the raised portion and the contact portion is provided with both of the supporting function and the grounding function. However, there may be provided the raised portion at other than the contact portion, further, a portion or a total of the contact portion may be constituted by the raised portion.

With regard to the carbon nanotube, the conductivity or the nonconductivity indicates a case in which the carbon nanotube is conductive or nonconductive with respect to the (conductive) portion and the main body portion of the intermediate support structure and a case in which similarly, in view of the conductivity, the electric conductivity is relatively high or low to an identifiable degree, typically, the conductive carbon nanotube indicates the carbon nanotube having the metallic conductivity and the nonconductive carbon nanotube indicates the carbon nanotube having comparatively high electric insulating performance such as a semiconductor having a comparatively large band gap or an insulator.

Further, there is well known the fact per se that the carbon nanotube is conductive (metallic conductivity) or nonconductive (conductivity of semiconductor or electric insulator) in accordance with a diameter or a chiral angle (spiral degree) thereof. The conductive carbon nanotube may be constituted by those having a constant diameter of chiral angle or mixed with those having different diameters of chiral angles so far as those are provided with the conductivity sufficiently larger than that of the nonconductive carbon nanotube. Further, diameters or the like of respective carbon nanotubes per se may not be constant. Similarly, the nonconductive carbon nanotube may be constituted by those having a constant diameter or chiral angle or mixed with those having different diameters or chiral angles so far as those are provided with the conductivity sufficiently smaller than that of the conductive carbon nanotube. Although it is preferable that a length of the carbon nanotube is sufficiently shorter than the size of the nonconductive main body portion macroscopically to disperse the carbon nanotube uniformly, so far as the resin operating as the base material can disperse the carbon nanotube sufficiently uniformly or homogenously, the length may comparatively belong. Further, depending on cases, the length may comparatively be long to make bond (including intertwining or the like) between the carbon nanotubes solid.

Although the carbon nanotube is typically constituted by so-to-speak single layer nanotube, so far as desired conductive property is achieved, the carbon nanotube may be constituted by those of plural layers (multilayers) or mixed with those of single layer and those of plural layers . Further, although the carbon nanotube is typically constituted only by carbon, depending on cases, an atom other than carbon may be interposed at an inner portion or a surface of the nanotube or between tubes.

The nonconductive main body portion and the conductive portion of the intermediate support structure are typically constituted by dispersing carbon nanotubes having different conductivities at different areas or portions of the same resin. That is, typically, there are separately prepared a nonconductive resin material constituted by dispersing a nonconductive carbon nanotube in a resin material at a desired rate by a uniform dispersion density (when the nonconductive main body portion is constituted by a plurality of kinds of secondary nonconductive portions, one kind or a plurality of kinds of nonconductive resin materials in accordance with the kinds), and a conductive resin material constituted by dispersing a conductive carbon nanotube in a resin material at a desired rate by a uniform distribution density (when the conductive portion is constituted by a plurality of kinds of secondary conductive portions, one kind or a plurality of kinds of conductive resin materials in accordance with the kinds), the nonconductive main body portion (area) and a desired pattern of the conductive portion (area) are formed and integrally molded by, for example, so-to-speak two colors or multicolors injection molding. According to the carbon nanotube dispersed in the resin by the uniform distribution density, a direction or an orientation thereof may be distributed also uniformly (isotropically), however, when the carbon nanotube is provided with a strip-like or a piece-like or linear shape as a whole, the orientation may be aligned to a certain degree or substantially completely in the longitudinal direction. Further, the two colors or multicolors injection molding technology per se of resin is well known (refer to for example, "Chapter 1.5.6. two colors (multicolors) injection molding process" in "Mold for injection molding Machine 7" (issued by the Institute of Discovery and Invention in Patent Map Series edited by the Japanese Patent Office).

As the resin, for example, as described above, polycarbonate resin is used. However, any other resin may be used so far as the resin is a material suitable for forming the intermediate support structure and a material capable of uniformly or homogeneously dispersing the carbon nanotube.

A rate of dispersing the carbon nanotube particle or powder in the resin may arbitrarily be selected in accordance with properties to be provided to the nonconductive main body portion and the conductive portion so far as the nonconductive main body portion and the conductive portion can integrally be formed in the intermediate support structure. From the view point of the conductivity, particularly, at the conductive area (portion) constituted by dispersing the conductive carbon nanotube, it is preferable that the rate of the carbon nanotube is high. Meanwhile, from the view point of the mechanical strength, in the case in which there is a concern that integration by the resin as the base material is liable to deteriorate when the rate of the carbon nanotube is high, there is substantially an upper limit in the rate of blending the carbon nanotube in accordance with a kind of a movable member, a kind of the resin or the like. Further, an upper limit may be provided in an amount of including the carbon nanotube or the rate of blending the carbon nanotube by constituting a reference by making softness of the base material resin in an elasticity limit stay at or above a predetermined level. Meanwhile, typically, the carbon nanotube is not only provided with high mechanical strength but also is provided with the elasticity of its own and therefore, the mechanical strength or the elasticity can be increased by dispersing the carbon nanotube in the resin. Therefore, from the view point of the mechanical property, a lower limit can be produced in the rate of the carbon nanotube in accordance with the kind of the intermediate support structure, the kind of the resin or the like. Particularly, when the contact portion of the conductive portion is projected from the nonconductive main body portion and pressed elastically to a conductive article as in a spring to ground or the like, it is preferable that the conductive portion includes the conductive carbon nanotube at a comparatively high rate at at least the projected area and a vicinity thereof. As described above, the upper limit and the lower limit, that is, a preferable range differs in accordance with the kind of the intermediate support structure, the kind of the resin or the like.

Instead of achieving to integrate the nonconductive main body portion and the conductive portion by the resin constituting the base material, a molded product of the intermediate support structure having a high rate or purity of the carbon nanotube may be formed by initially molding the intermediate support structure by using an organic material operating as a binder, thereafter, substantially burning off the binder portion by thermal decomposition or vaporization by heating to thereby substantially sinter the carbon nanotube. In this case, for example, the carbon nanotubes are bonded to each other by a residue produced by burning off the binder portion. However, when the carbon nanotubes can be bonded to each other by desired strength in accordance with use of the intermediate support structure, the residue or the like may actually be dispensed with.

Further, when a static electricity blocking function is provided along with the grounding function or in place of the grounding function, the intermediate support structure may be provided with the nonconductive main body portion including the nonconductive carbon nanotube and the conductive portion including the conductive carbon nanotube integrally molded with the main body portion for surrounding an article to be blocked in order to restrain a disturbing signal from entering the article to be blocked.

As described above, according to the intermediate support structure, a size thereof can be minimized and therefore, the intermediate support structure is suitable for being used as a small electric machine part such as a part of an electronic timepiece such as a quartz type watch. In comparison with the exemplified conventional technology, one of two conductive parts in contact with two surface exposed contact portions or contact portions at two locations of the conductive portions of the intermediate support structure, corresponds to, for example, the winding stem and other thereof corresponds to an exterior part of a timepiece such as the case back. In this case, the intermediate support structure achieves two roles of a role of for example, the middle frame or the movement main body portion and a role of the spring. Naturally, the intermediate support structure may achieve a role of other one or plural timepiece parts in place of the middle frame or the movement main body portion of the electronic timepiece or may be used as a part of an electronic apparatus or an electronic machine apparatus other than the electronic timepiece. Meanwhile, at an area proximate to or in contact with an electronic/electric machine part portion of the movement including IC or the circuit block of the timepiece or the movement per se, in order to avoid static electricity from leaking or flowing to IC or the circuit block, the area may be made nonconductive, that is, may be included in the nonconductive main body portion.

Embodiments of the present invention will now be described by way of further example only and with reference to the accompanying drawings, in which:-
Fig. 1 is a bottom explanatory view of an electronic timepiece of a preferable first embodiment according to the invention (state removed of case back);
Fig. 2 is an explanatory view of a section taken along a line II-II of Fig. 1;
Fig. 3 is a perspective explanatory view of a middle frame of the electronic timepiece of Fig. 1;
Figs. 4 illustrate views for explaining flow of static electricity when a winding crown is touched by the charged body in which Fig . 4A is an explanatory view of a case of a conventional electronic timepiece and Fig. 4B is an explanatory view of a case of the electronic timepiece of Fig. 1;
Fig. 5 is a bottom explanatory view of an electronic timepiece of a preferable second embodiment according to the invention (state removed of case back);
Fig. 6 is an explanatory view of a section taken along a line VI-VI of Fig. 5; and
Fig. 7 is a view for explaining flow of static electricity when a winding crown is touched by the body bearing static electricity in the electronic timepiece of Fig. 5.

An explanation will be given of several preferable modes for carrying out the invention based on preferable embodiments shown in the attached drawings as follows.

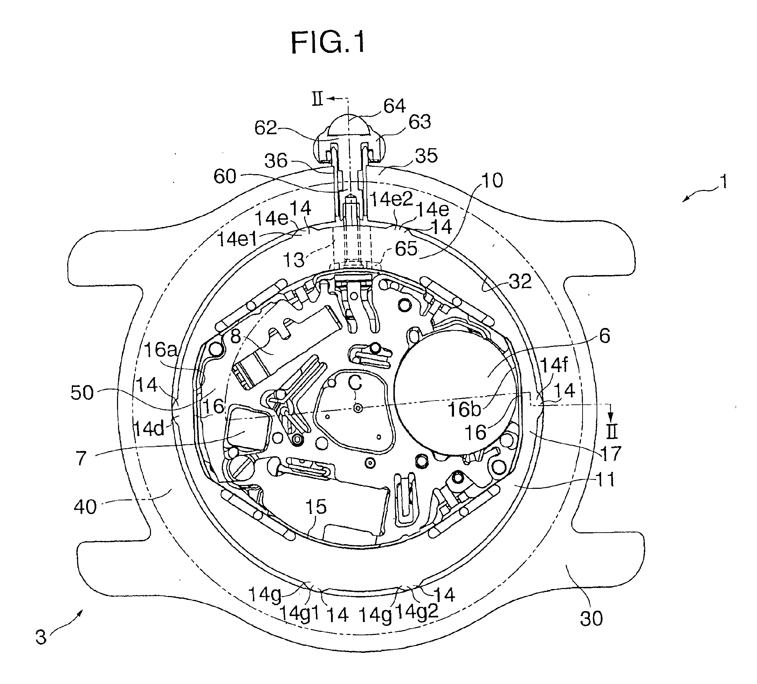

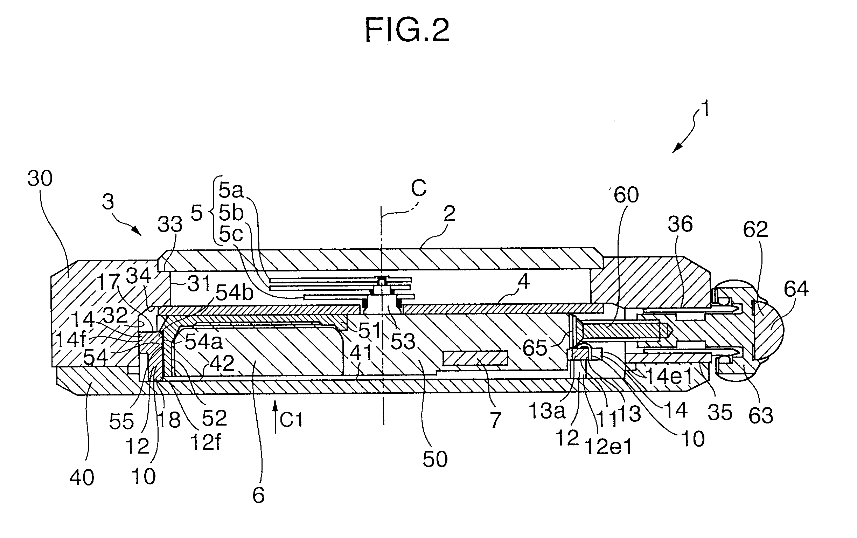

Fig. 1 and Fig. 2 show a quartz type watch 1 for a female person constituting an electronic timepiece using a middle frame 10 as an intermediate support structure of a preferable first embodiment according to the invention. According to the watch 1, an exterior case 3 is formed by a case body 30 constituting a rigid frame member and a glass plate 2 at a front face attached thereto as well as a case back 40 constituting a rigid frame member attached to the case body 30 and a movement 50 constituting an article to be supported is contained at inside of the case 3. Further, numeral 4 designates a dial and numeral 5 designates hands (second hand 5a, minute hand 5b, hour hand 5c).

The case body 30 substantially in a ring-like shape includes concentric opening portions or central hole portions 31 and 32 having a small diameter and a large diameter at a center thereof, the glass plate 2 is attached to a ring-like notched portion 33 at a surface side peripheral edge portion of the small diameter opening portion 31 and the dial 4 is brought into contact with a ring-like planar portion 34 between the large diameter opening portion 32 and the small diameter opening portion 31.

The movement 50 is supported by the case body 30 via a main plate 51, the main plate 51 is formed with a battery containing recessed portion 52 opened to a side of the case back 40 and a button type battery 6 for driving the movement 50 is contained at the recessed portion 52. The movement 50 electrically or electronically includes a circuit board (not illustrated) as well as a circuit block (not illustrated) mounted with various kinds of electric machine parts (not illustrated) or electric parts 9 of an integrated circuit chip (IC) 7, an oscillator 8, a motor and the like driven by the battery 6 and having wiring patterns, and mechanically drives to rotate the hands 5 by way of a train wheel (not illustrated) and a pinion portion 53 driven under control of circuits mounted to the circuit block and the circuit board.

Further, at a peripheral wall 35 of the case body 30, there is formed a diameter direction hole 36 opened at a peripheral face of the large diameter recessed portion 32, the hole 36 is inserted with a winding stem 60 made of a metal, a front end gear portion (not illustrated) of which is engageable with the pinion portion 53 via the train wheel and a winding crown 62 operable by the finger is attached to a base end or an outer side end of the winding stem 60. The winding crown 62 includes, for example, a portion 63 made of a metal and a nonconductive portion 64.

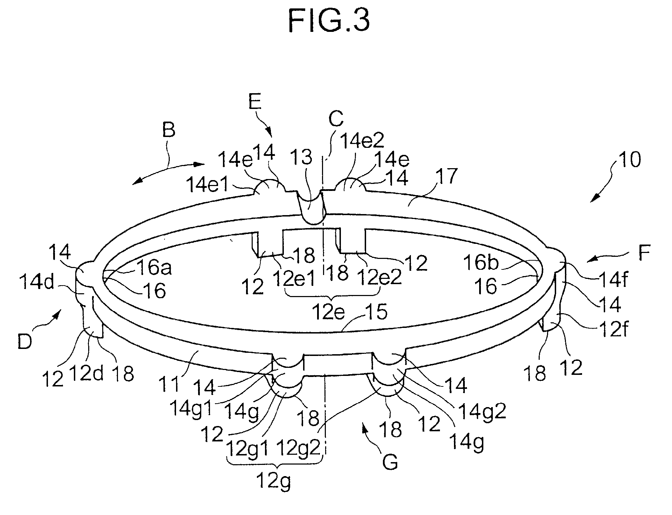

More in detail, between the movement 50 and the case back 40, there is arranged the middle frame 10 made of a composite conductive resin material produced by uniformly dispersing and integrally molding a conductive carbon nanotube to a resin. As shown by a perspective view of Fig. 3 in addition to a plane view of Fig. 1 and a sectional view of Fig. 2, the middle frame 10 includes a main body portion 11 substantially in a ring-like shape, and supporting leg portions 12d, 12e, 12f and 12g (designated by notation "12" when generally referred to or respectives thereof are not discriminated) projected to the case back 40 in parallel with a central axis line C of the timepiece 1 at four areas D, E, F and G in a peripheral direction B substantially at equal intervals in the peripheral direction B of the main body portion 11. Further, at the region E, the supporting leg portion 12e is constituted by two leg portions 12e1 and 12e2 formed at an interval in the peripheral direction B and a recessed portion 13 for arranging the winding stem 60 is formed between the leg portions 12e1 and 12e2. Further, a bridge portion 13a constituting a bottom wall of the recessed portion 13 is brought into contact with a front end large diameter portion 65 of the winding stem 60. Meanwhile, also at the region G, there are formed two leg portions 12g1 and 12g2 at positions substantially symmetrical with the leg portions 12e1 and 12e2 with respect to the center axis line C. Further, as is known from Fig. 1 and Fig. 3, at base portions of the respective leg portions 12d, 12e, 12f and 12g, there are formed projected portions or raised portions 14d, 14e, 14f and 14g (designated by notation "14" when generally referred to or respectives are not discriminated) projected in radius directions relative to the middle frame main body portion in the ring-like planar shape, and the middle frame 10 is brought into contact with a peripheral face of the large diameter opening portion 32 of the case body 30 and supported by the case body 30 at projected ends of the projected portion 14d, 14e (comprising 14e1 and 14e2), 14f and 14g (comprising 14g1 and 14g2). An inner peripheral face 15 substantially in a circular shape of the middle frame main body portion 11 is notched with recessed portions 16a and 16b (designated by notation "16" when generally referred to or respectives thereof are not discriminated) to fit to a shape of the movement 50 (including the main plate 51) to be arranged on an inner side thereof, meanwhile, the main plate 51 of the movement 50 is formed with a notched portion 55 providing engaging faces 54a and 54b (designated by notation "54" when generally referred to or respectives thereof are not discriminated) extended in an axial direction and extended in a diameter direction for receiving portions of an inner peripheral face 16 at a front side end face 17 of the ring-like main body portion 11 of the middle frame 10.

Further, as is known from Fig. 3, the main body portion 11 of the middle frame 10 as the intermediate support structure, is not only elastically deformable such that according to an annular shape or a ring-like shape thereof, an annulus or a ring becomes noncircular in a face of the annulus or the ring but also elastically deformable such that the annulus or the ring is twisted around an axis line along a diameter in an arbitrary direction and the face formed by the annulus and the ring becomes a curved face. Further, according to the middle frame 10, a base material thereof comprises a resin and therefore, when the middle frame 10 is exerted with large external force, the support leg portion 12 constituting the projected portion in the axis line direction and the projected portion 14 in the diameter direction become compressibly be deformed comparatively easily in an elasticity limit thereof.

Therefore, when the middle frame 10 is integrated into the timepiece 1 by engaging an engaging portion (not illustrated) of the case back 40 to an engaging portion (not illustrated) of the case body 30, with respect to the axis line direction, a lower end or a projected end 18 of the leg portion 12 is pushed to a front side in C1 direction by a bottom face 42 of an inner side recessed portion 41 of the base back 40, a portion of the front side end face 17 is brought into contact with a corresponding engaging face 54b of the main plate 51 of the movement 50 and the movement 50 is pressed to the dial 5 supported by the ring-like planar portion 34 of the case body 30 to thereby fix the movement 50 to the case back 30.

Meanwhile, with respect to the diameter direction, when the middle frame 10 is integrated into the timepiece 1 by engaging the case back 40 and the case body 30, the projected portion 14 of the middle frame 10 is brought into contact with a peripheral face of the large diameter opening portion 32 of the case body 30 and is pressed to a corresponding outer peripheral portion of the movement 50 by the inner peripheral face 16 of the ring-like main body portion 11 of the middle frame 10 and therefore, the movement 50 is fixed to the case body 30.

In integrating the middle frame 10, even when force in C1 direction exerted to the support leg portions 12d, 12e, 12f and 12g of the middle frame 10 differs to some degree due to a dimensional error, an error in the shape or the like, the main body portion 11 in the ring-like flat plate shape of the middle frame 10, absorbs or compensates for the error in dimensions or shape by twisting the main body portion 11 within the elasticity limit such that the plane of the annulus is bent into a shape of a curved face or the support leg portions 12d, 12e, 12f and 12g are compressively deformed in the elasticity limit. Similarly, even when force in the diameter direction exerted to the support leg portions 12d, 12e, 12f and 12g of the middle frame 10 differs to some degree due to a dimensional error, an error in the shape or the like, the error in dimensions or shape is absorbed or compensated for by making the annulus of the ring-like main body portion 11 of the middle frame 10 noncircular such as an elliptic shape within the elasticity limit or by compressively deforming the projected portions 14d, 14e, 14f and 14g within the elasticity limit. Here, elastic deformation of the middle frame 10 serves to fix the movement 50 into the case 3 including the case body 30 and the case back 40 by the middle frame 10.

According to the electronic timepiece 1 constituted as described above, when the user of the timepiece 1 touches the metal made portion 63 of the winding crown 62 by the finger, for example, for setting time in a state in which the user is electrostatically charged, as shown by Fig. 4B, static electricity of the body of the user is conducted from the metal made portion 63 of the winding crown 62 to the metal made winding stem 60, successively conducted from the front end large diameter portion 65 of the winding stem 60 to the bottom bridge portion 13a of the recessed portion 13 of the middle frame 10 made of a conductive composite resin material brought into contact with the large diameter portion 65, further, conducted from the support leg portion 12 of the middle frame 10 made of the conductive composite resin material to the case back 40 in contact therewith. Naturally, a flowing direction of electric charge or a flowing direction of current is reversed in accordance with whether charge of the finger is plus or minus relatively. Further, when there is not actually a potential difference between the finger of the right hand and the wrist of the left hand wearing the timepiece 1, regardless of whether the user is charged, there is not actually a concern that electric charge of static electricity flows to IC 7 or the like of the movement 50 of the timepiece 1.

As a result, when the user of the watch 1 touches the metal portion 63 of the winding crown 62 in the charged state, there is hardly a concern that electric charge caused by static electricity flows to IC 7 or the like of the watch 1 and there is hardly a concern that IC 7 or the like is destructed or erroneously operated.

As described above, according to the watch 1, the middle frame 10 comprising the composite resin material is interposed between the movement 50 and the case back 40 and the case body 30 and therefore, nonuniform stress or excessively large compressive stress can be absorbed by elastic deformation of the middle frame 10 per se in view of the shape and in view of the material and therefore, the middle frame 10 can fixedly hold the movement 50 at inside of the case 3 without using a spring made of a metal or the like. Further, according to the example, arrangement or the number of the support leg portions 12, arrangement or the number of the projected portions 14, further, the shape of the middle frame 10 or the like can be changed as desired.

Further, according to the watch 1, the middle frame 10 comprising the conductive composite resin material is brought into contact with the winding stem 60 at the surface side recessed portion 13 and is brought into contact with the metal made case back 40 at the lower end face 18 of the support leg portion 12 and therefore, even when static electricity is brought from the portion of the winding crown 62, the static electricity can be made to flow to the metal made case back 40 via the conductive middle frame 10 such that it can substantially be avoided that current by the static electricity flows to IC 7 or the like at inside of the movement 50 or excessive voltage is applied to IC 7 or the like of the movement 50 and therefore, there is hardly a concern that IC 7 or the like is destructed or erroneously operated.

Further, so far as the middle frame 10 is provided with a conductive path between the recessed portion 13 and the lower end face 18 of the support leg portion 12, instead of making a total of the middle frame 10 conductive, a portion of the middle frame 10 may be conductive. Particularly, in order to avoid a concern of bringing about discharge or the like accompanied by electric charge at areas of the middle frame 10 directly contiguous to or opposed to various electronic parts, wiring patterns or the like of the movement 50, areas of the movement 50 including these areas may be made nonconductive. Further, when desired, a portion or a total of the projected portion 14 brought in contact with the peripheral face of the opening portion 32 of the case body 30 or a larger area including the projected portion 14 may be made nonconductive. Such a nonconductive area constituting a nonconductive main body portion may be smaller or larger than a conductive portion or area, for example, the nonconductive area may occupy most area of the middle frame 10. In any of the cases, the nonconductive area is formed by a nonconductive composite resin material produced by dispersing a nonconductive carbon nanotube in a resin. In this case, in order to form the nonconductive area, typically, there is used a resin base material substantially the same as the resin base material of the conductive composite resin material for dispersing the conductive carbon nanotube in order to form the conductive area for forming the conductive path and the conductive area (conductive portion) and the nonconductive area (nonconductive portion or nonconductive main body portion) are integrally molded by so-to-speak two colors or multicolors injection molding process.

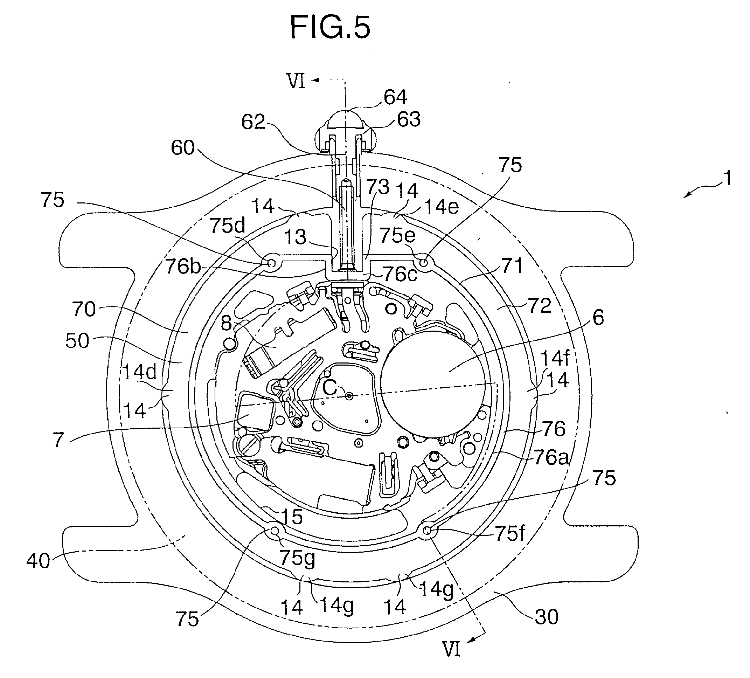

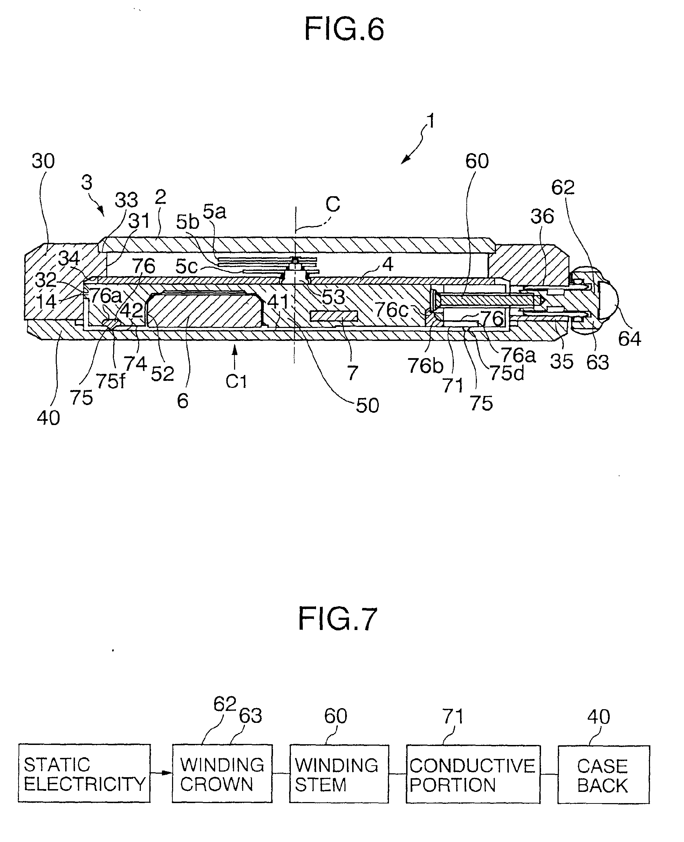

Further, rigidity (modulus of elasticity in a unit of N/m² with respect to compressive deformation) of a composite resin material is sufficiently smaller and harder than rigidity of a metal material such as stainless steel although the composite resin material is dispersed with a carbon nanotube and reinforced by the carbon nanotube and therefore, instead of forming the middle frame 10 separately from the main body portion of the movement 50 (for example, main plate 51 or the like), as shown by Figs. 5 and 6, a main body portion 70 of the movement 50 may be formed by a conductive portion 71 and a non conductive portion 72 to constitute an intermediate support structure. Other portion of the movement 50 is typically fixed to the main body portion 70 directly or indirectly by fastening the other portion by screws or attachedly fitting the other portion thereto. In this case, the conductive portion 71 is typically formed by a conductive rigid resin material produced by dispersing a conductive carbon nanotube in a resin base material, the nonconductive portion 72 is typically formed by a nonconductive rigid resin material produced by dispersing a nonconductive carbon nanotube in a resin base material the same as or the same kind of the resin base material of the conductive portion 71 and the conductive portion 71 and the nonconductive portion 72 are integrally molded by the two colors or multicolors injection molding process. Further, according to a second embodiment of the invention shown in Fig. 5 through Fig. 7, members, portions or elements the same as or similar to those of the embodiment shown in Fig. 1 through Fig. 4, are attached with notations the same as those in the case of the first embodiment.

More in detail, for example, the conductive portion 71 is constituted by a winding stem supporting portion 73 brought into contact with the large diameter portion 65 of the winding stem 60, projected portions 75d, 75e, 75f and 75g (designated by notation "75" when generally referred to or respectives thereof are not discriminated) projected from a back face 74 of the movement main body portion 70 opposed to the bottom face 42 of the inner side recessed portion 41 of the case back 40, and a surface conductive path portion 76 connecting the winding stem supporting portion 73 and the projected portion 75. The surface conductive path portion 76 includes, for example, a circular or a ring-like conductive path 76a connecting the projected portions 75 and conductive paths 76b and 76c in a diameter direction and an axis line direction for connecting the ring-like conductive path 76a and the winding stem supporting portion 73. Further, either one of the conductive winding stem supporting portion 73 and the conductive large diameter portion 65 may constitute a conductive bearing portion (also similarly in the case of the first embodiment).

Further, according to the watch 1 of the second embodiment, at portions of the peripheral face portion of the movement main body portion 70 proximate of the surface of the watch 1, there are formed the projected portion 14d, the projected portion 14e (that is, projected portions 14e1, 14e2), the projected portion 14f, and the projected portion 14g (that is, projected portions 14g1, 14g2) constituting portions of the nonconductive main body portion 72 comprising the nonconductive composite resin material.

According to the watch 1 of the second embodiment, the movement 50 can be fixed into the case 3 by absorbing various errors of dimensions and shape in integrating the movement 50 by the case back 40 and by deformation of the projected portions 75 and the projected portions 14 of the movement main body portion 70 made of the composite resin material within the elasticity limit.

Further, according to the watch 1 of the second embodiment, there is formed the surface conductive path portion 76 connecting a contact face of the winding stem supporting portion 73 and contact faces of the projections 75 at the main body portion 70 of the movement 50 and therefore, even when the metal portion 63 of the winding crown 62 is touched by the finger in a state in which the body is charged by static electricity, the static electricity escapes from the metal portion 63 of the winding crown 62 to the case back 40 by passing through the winding stem 60 as well as the conductive portion 71 (that is, the conductive winding stem supporting portion 73, the conductive path 76 and the conductive projected portions 75 of the conductive portion 71) of the movement min body portion 70. Therefore, there is hardly a concern that excessively large current by static electricity flows or excessively large voltage by static electricity is applied to IC 7 or the like constituting an electronic processing main body portion of the movement 50 and there is hardly a concern that IC 7 or the like is destructed or erroneously operated.

## Claims

1. An intermediate support structure comprising:
an elastically deformable base material included a resin,
a conductive portion produced by dispersing a conductive carbon nanotube in the resin base material,
wherein the conductive portion contacts with corresponding conductive articles at surface exposed contact portions to provide a conductive path between two of the conductive articles.

2. The intermediate support structure according to Claim 1, wherein a total thereof comprises the conductive portion.

3. The intermediate support structure according to Claim 1, further comprising a nonconductive main body portion constituted by dispersing a nonconductive carbon nanotube in a resin of a base material, wherein the nonconductive main body portion is integrally molded with the conductive portion.

4. The intermediate support structure according to Claim 3, constituted to support an article to be supported by being mechanically engaged with the article to be supported at the nonconductive main body portion.

5. An intermediate support structure which is an intermediate support structure interposed between a substantially rigid article to be supported and a substantially rigid frame member attached with two conductive articles for fixing the article to be supported to the frame member comprising:
a nonconductive main body portion and at least one conductive portion molded integrally with the main body portion;
wherein the nonconductive main body portion includes a nonconductive carbon nanotube;
wherein the conductive portion includes a conductive carbon nanotube and includes contact portions exposed at two portions of a surface of the intermediate support structure to provide a conductive path between the two conductive articles; and
wherein at least one of the nonconductive main body portion and the conductive portion includes a projected portion elastically pressed to the frame member.

6. The intermediate support structure according to Claim 5, wherein respectives of the conductive and the nonconductive carbon nanotubes are uniformly dispersed in a resin base material and the projected portion is constituted by a raised portion.

7. The intermediate support structure according to Claim 3, or claim 5, wherein the conductive portion is disposed at an inner portion of the nonconductive main body portion at a portion thereof other than the contact portion.

8. The intermediate support structure according to claim 3, or claim 5, wherein the conductive portion is extended along a surface of the intermediate support structure between the contact portions.

9. The intermediate support structure according to claim 3 or claim 5, wherein the intermediate support structure is a part of an electronic timepiece.

10. The intermediate support structure according to claim 9, wherein one of the conductive parts is a winding stem.

11. The intermediate support structure according to claim 9, wherein one of the conductive parts is an exterior part of the timepiece.

12. An electronic timepiece having the intermediate support structure according to of claim 9.
